# EUROPÄISCHE PATENTSCHRIFT

(11) **EP 0 747 259 B1**
(45) Veröffentlichungstag und Bekanntmachung des Hinweises auf die Patenterteilung: **30.08.2000**
(21) Anmeldenummer: 96108992.7
(22) Anmeldetag: 05.06.1996
(51) Int. Cl.: B60N 2/48

(54) **Kopfstützenklappvorrichtung**
Folding device for a head rest
Dispositif de repliage d'un appui-tête

(30) Priorität: 08.06.1995 DE 19520893
(43) Veröffentlichungstag der Anmeldung: 11.12.1996
(73) Patentinhaber: Friedr. Fingscheidt GmbH, 42551 Velbert (DE)
(72) Erfinder: Heckmann, Thomas Dipl.-Ing., 71134 Aidlingen (DE); Schlaffke, Hans J., 88348 Saulgau (DE); Linnenbrink, Jörg Ing.P.EUR., 42327 Wuppertal1 (DE); Knop, Rolf, 42551 Velbert (DE); Wiesner, Jürgen, 42551 Velbert (DE); Heise, Dieter, Dipl.-Ing., 42551 Velbert (DE)
(74) Vertreter: Patentanwälte Dr. Solf & Zapf

(56) Entgegenhaltungen:
- EP-A- 0 469 979
- EP-A- 0 636 513
- DE-A- 3 912 403
- DE-A- 3 925 837
- DE-A- 4 211 339

## Beschreibung

Die vorliegende Erfindung betrifft eine Klappvorrichtung für eine Kfz.-Kopfstütze mit einem an einem Lagerteil um eine Schwenkachse schwenkbar gelagerten Kopfstützenhalteteil, welches zwischen einer Rückklappstellung und einer Hochklappstellung verschwenkbar sowie in der Hochklappstellung über ein Fallenschloß mittels einer parallel zur Schwenkachse des Halteteils angeordneten Verriegelungsstange verriegelbar und zur Freigabe der Schwenkbewegung in die Rückklappstellung über einen Lösemechanismus entriegelbar ist.

Eine derartige Klappvorrichtung ist aus der EP-A-0 636 513 (A1) bekannt. Diese Klappvorrichtung besteht im wesentlichen aus zwei aus Kunststoff hergestellten Hauptkomponenten, und zwar aus einem Lagerteil, das im Bereich zwischen Rückbank und Hutablage eines PKWs befestigbar ist und einem an diesem um eine Schwenkachse schwenkbar gelagerten Kopfstützen-halteteil. An diesem Halteteil ist eine Kopfstütze anbringbar, die zwischen einer verriegelten Hochklappstellung und einer Rückklappstellung manuell verschwenkbar ist. Hierbei erfolgt ausgehend von einer verriegelten Hochklappstellung ein Entriegeln über ein pneumatisches Betätigungsorgan, eine sog. "Unterdruckdose", wodurch das Halteteil freigegeben und durch eine Federkraft in die Rückklappstellung zurückgeklappt wird.

Die beschriebene Klappvorrichtung hat sich in der Praxis weitgehend gut bewährt und soll im folgenden weiter entwickelt und verbessert werden.

Der vorliegenden Erfindung liegt die Aufgabe zugrunde, eine Klappvorrichtung zu schaffen, die bei zumindest gleichbleibend guten Gebrauchs- und Sicherheitseigenschaften und Beibehaltung der manuellen Verschwenkbarkeit mit konstruktiv einfachen Mitteln zusätzlich automatisch verschwenkbar ist.

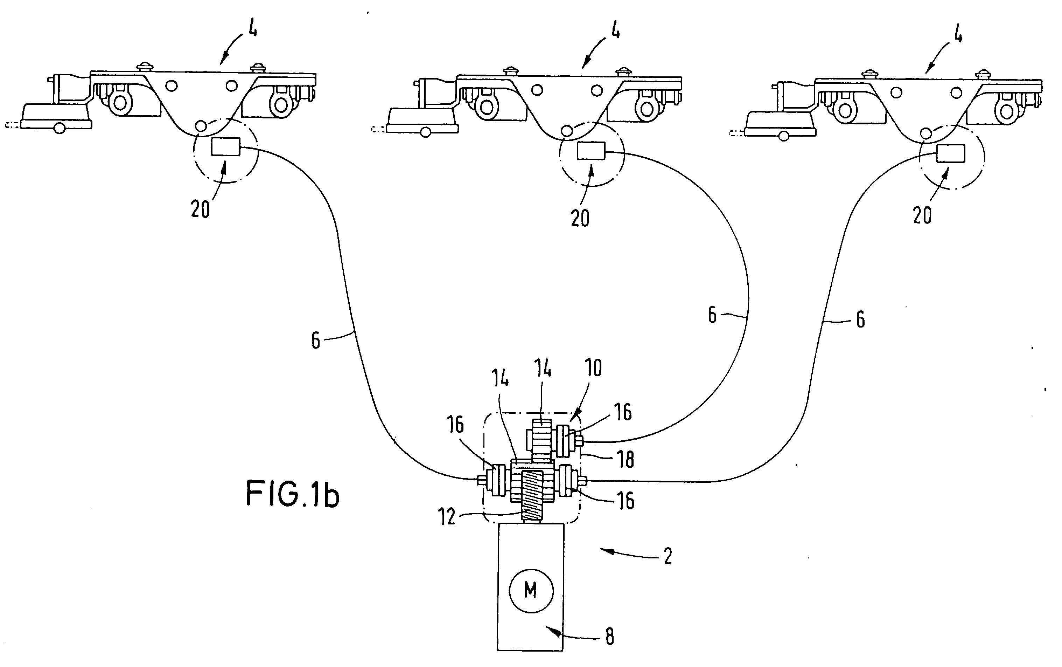

Erfindungsgemäß wird dies erreicht durch eine motorisch antreibbare Antriebseinrichtung mit mindestens einem mit dem Lagerteil stationär verbundenen Zahnradelement und mindestens einem mit dem Halteteil verbundenen und zum Verschwenken des Halteteils mit dem Zahnradelement zusammenwirkend antreibbaren Gebtriebeelement, welches an der Verriegelungsstange angeordnet ist. Mit Vorteil wird dieses Getriebeelement im wesentlichen über eine flexible Antriebswelle von einer Antriebseinheit angetrieben. Hierbei besteht diese Antriebseinheit insbesondere aus einem elektrischen Antriebsmotor und einer Getriebeeinheit. Mit der erfindungsgemäßen Klappvorrichtung sollen in Kraftfahrzeugen je nach Bedarf eine oder mehrere Kopfstützen wahlweise automatisch oder manuell verschwenkbar gemacht werden (siehe Fig. 1b).

Das gesamte System (Antriebseinheit, Antriebswelle, Getriebeelement, Klappvorrichtung) weist durch unterschiedliche Anschlußmöglichkeiten der Antriebswellen an den Getriebeeinheiten eine hohe Variabilität auf, die einen Einbau bei unterschiedlichsten Platzverhältnissen in den verschiedenen Kraftfahrzeugen gewährleistet. So sind beispielsweise an der Getriebeeinheit des Antriebsmotors Anschlüsse für vorzugsweise beide Drehrichtungen vorgesehen. Weiterhin sind für das auf der Verriegelungsstange gelagerte Getriebeelement insbesondere zwei verschiedene Anschlußvorrichtungen vorgesehen. Eine Ausführungsform besitzt einen Anschluß für eine Antriebswelle, der senkrecht zur Verriegelungsstange bzw. Schwenkachse angeordnet ist, und eine zweite Ausführungsform besitzt einen Anschluß für eine Antriebswelle, der parallel zu der Verriegelungsstange bzw. Schwenkachse angeordnet ist. Hierbei weist die zweite Ausführungsform des Getriebeelements wiederum einen vorzugsweise beidseitigen Anschluß für verschiedene Drehrichtungen einer Antriebswelle auf.

Weitere vorteilhafte Ausgestaltungsmerkmale der Erfindung sind in den nachfolgenden Figuren der Zeichnung sowie in den Unteransprüchen enthalten. Es zeigen:
- Fig. 1a: eine schematische Darstellung einer erfindungsgemäßen motorisch angetriebenen Kopfstützenklappvorrichtung,
- Fig. 1b: eine schematische Darstellung von drei erfindungsgemäßen motorisch angetriebenen Kopfstützen-Klappvorrichtungen,
- Fig. 2: ein Draufsicht einer herkömmlichen Kopfstützen-Klappvorrichtung,
- Fig. 3: eine Ansicht auf die Klappvorrichtung in Pfeilrichtung III gemäß Fig. 2,
- Fig.4: einen Längsschnitt in der Schnittebene IV - IV gemäß Fig. 3,
- Fig. 5: einen Querschnitt in der Schnittebene V - V gemäß Fig. 2,
- Fig. 6: eine Schnittdarstellung einer möglichen Ausführungsform des Getriebeelements der Klappvorrichtung,
- Fig. 7: eine Schnittdarstellung einer weiteren Ausführungsform des Getriebelements der Klappvorrichtung,
- Fig. 8: einen Querschnitt in der Schnittebene VIII - VIII gemäß Fig. 2, mit einer ersten möglichen Ausführungsform einer erfindungsgemäßen Antriebseinrichtung,
- Fig. 9: eine vergrößerte Teilansicht auf ein Einzelteil in Pfeilrichtung IX gemäß Fig. 2,
- Fig. 10: einen Schnitt durch das Einzelteil in der Schnittebene X - X gemäß Fig. 9,
- Fig. 11: eine gegenüber Fig. 9 rückwärtige Ansicht des Einzelteils in Pfeilrichtung XI gemäß Fig. 10,
- Fig. 12: einen Querschnitt in der Schnittebene XII - XII gemäß Fig. 2, mit einer zweiten möglichen Ausführungsform einer erfindungsgemäßen Antriebseinrichtung,
- Fig. 13a und b: eine schematische Darstellung einer möglichen Ausführungsform der Parallelogrammführung, und
- Fig. 14: eine weitere mögliche Ausführungsform des Getriebeelements in einer perspektivischen Darstellung.

In den nachfolgenden Figuren der Zeichnung sind gleiche und sich funktionell entsprechende Teile mit denselben Bezugsziffern versehen.

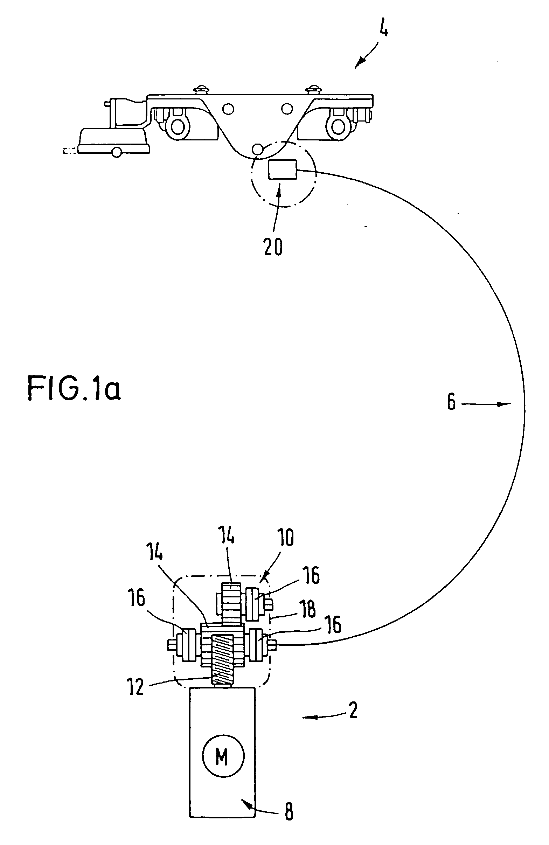

Die Fig. 1a zeigt eine schematische Darstellung einer elektromotorisch angetriebenen Kopfstützen-Klappvorrichtungsanordnung. Im wesentlichen besteht die dargestellte Anordnung aus einer Antriebseinheit 2, mindestens einer motorisch antreibbaren Klappvorrichtung 4 und mindestens einer biegsamen Antriebswelle 6, die als Verbindungs- bzw. Übertragungsglied von der Antriebseinheit 2 zu der jeweiligen Antriebseinrichtung der Klappvorrichtung 4 wirkt.

Die Antriebseinheit 2 besteht aus einem elektrischen Antriebsmotor 8, der mit einer Getriebeeinheit 10 verbunden ist. Die Getriebeeinheit 10 besteht im wesentlichen aus einem mit dem Antriebsmotor 8 drehmomentschlüssig verbundenen Schneckenrad 12 und mindestens einem von diesem angetriebenen Ausgangszahnrad 14. Das Ausgangszahnrad 14 ist hierbei einseitig oder beidseitig mit einer Kupplungseinheit 16, die insbesondere als elektromagnetische Klauenkupplung ausgeführt ist, verbindbar. Die Getriebeeinheit 10 kann somit durch die Anzahl der Zahnräder 14 auf beliebig viele Anschlüsse für die jeweiligen Antriebswellen 6 erweitert werden. Über die biegsamen Antriebswellen 6 werden entsprechend der ersten Übersetzung (Schneckenrad 12, Ausgangszahnrad 14) die Rotationsbewegungen des Antriebsmotors 8 mit einer entsprechend niedrigeren Drehzahl auf eine zweite Getriebeeinheit - im folgenden als Getriebeelement 20 bezeichnet - übertragen, die als Antriebsgetriebe für die jeweilige Klappvorrichtung 4 dient.

Die Fig. 1b zeigt eine Anordnung gemäß Fig. 1a mit insgesamt drei Klappvorrichtungen 4, die über dieselbe Antriebseinheit 2 angetrieben werden. Hierbei ist von Vorteil, daß an jedem Ausgangszahnrad 14 beidseitig elektromagnetische Klauenkupplungen 16 angeordnet sind, und somit jedes Ausgangszahnrad 14 zwei Anschlüsse mit entgegengesetzten Drehrichtungen aufweist. Weiterhin ist aus Fig. 1b zu erkennen, daß die Getriebeelemente 20 in dieser Ausführung entsprechend der Rotationsverhältnisse wahlweise von rechts oder von links angeschlossen werden können (verschiedene Drehrichtungsanschlüsse).

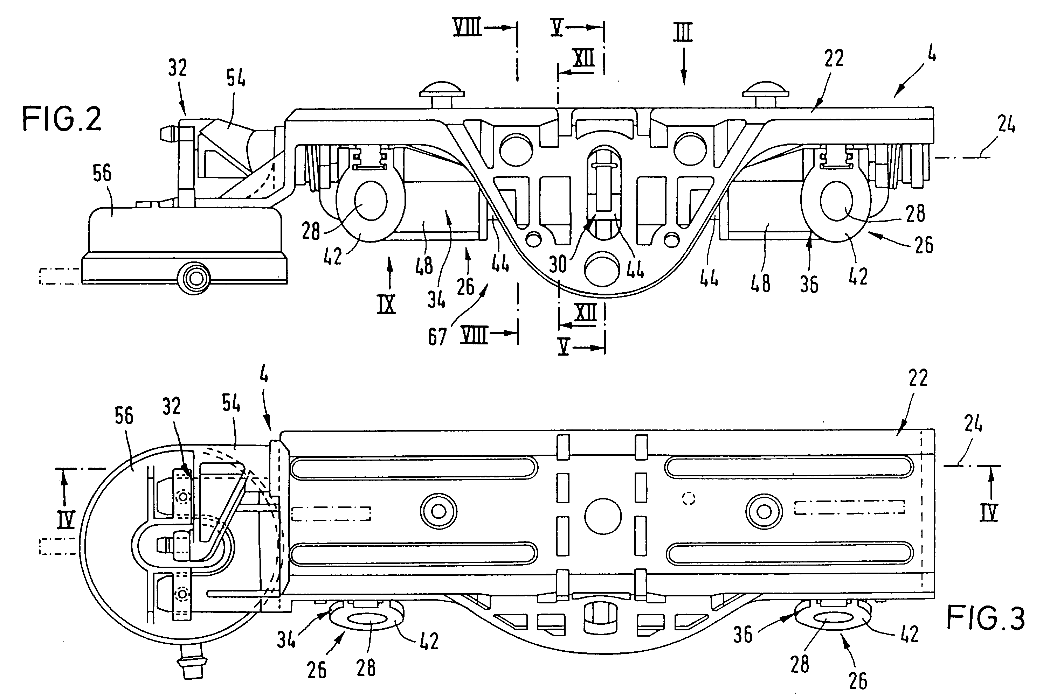

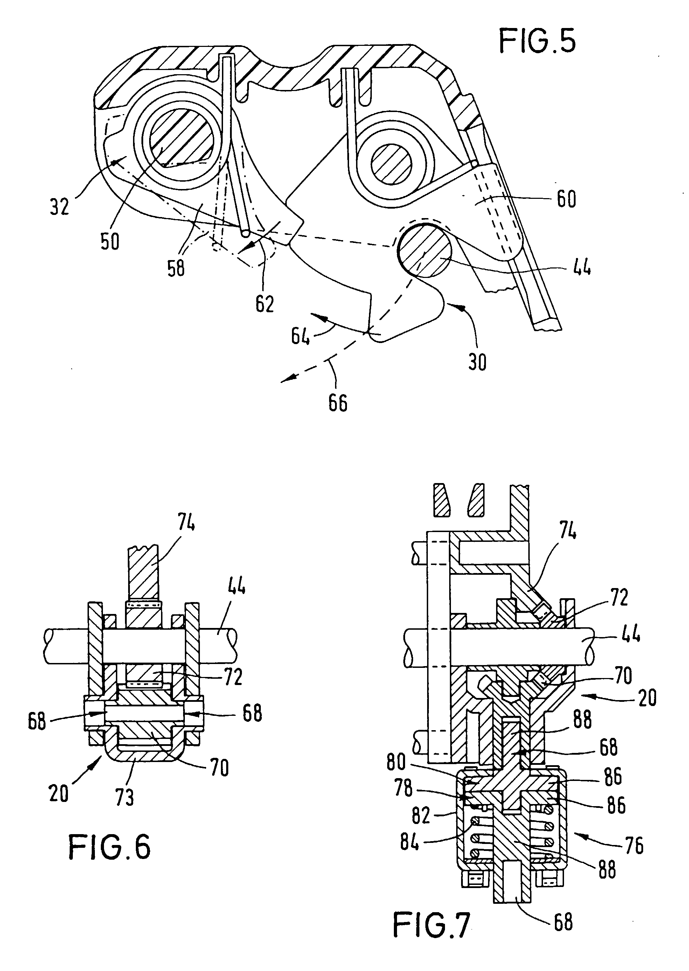

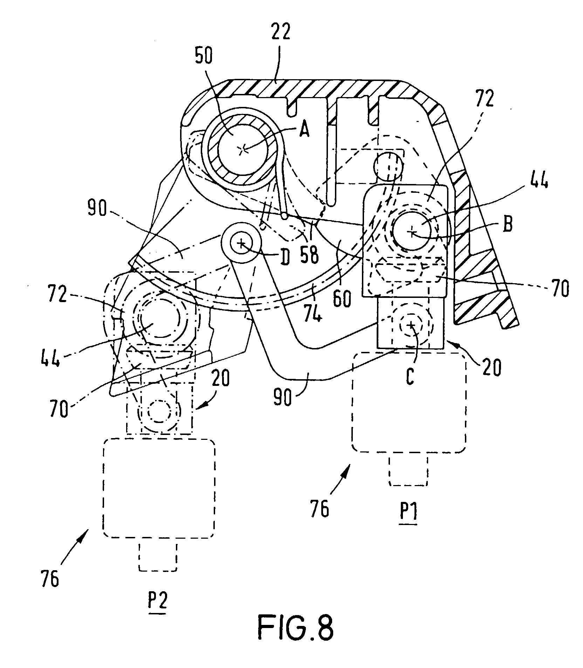

Die Fig. 2 zeigt eine bekannte Klappvorrichtung 4, die im wesentlichen aus zwei Hauptkomponenten besteht, und zwar aus einem Lagerteil 22 und einem an diesem um eine Schwenkachse 24 schwenkbar gelagerten Halteteil 26. Dieses Halteteil 26 weist zwei zur Schwenkachse 24 senkrecht und zueinander parallele Aufnahmeöffnungen 28 zur arretierbaren Aufnahme von zwei zueinander parallelen Enden von Trägerstangen einer Kopfstütze auf (nicht dargestellt). Das Lagerteil 22 ist als Aufnahmeplatte mit zwei zueinander in einem stumpfen Winkel angeordneten Plattenabschnitten ausgebildet (siehe hierzu insbesondere die Fig. 5 und 8). Das Halteteil 26 ist vorzugsweise mit einer Federkraft beaufschlagt, so daß es selbsttätig in eine Rückklappstellung verschwenkbar ist, in der die am Halteteil 26 befestigte Kopfstütze in einer Aufnahmemulde einer Hutablage versenkt angeordnet ist (sogenannte "Nichtgebrauchsstellung"). Mittels der Kopfstütze kann dann das Halteteil 26 aus der Rückklappstellung gegen die Federkraft in eine Hochklappstellung (Gebrauchsstellung der Kopfstütze) gebracht werden, wobei das Halteteil 26 in der Hochklappstellung über ein Fallenschloß 30 verriegelt ist (siehe Fig. 5). Zur Freigabe der federkraftbedingten Schwenkbewegung in die Rückklappstellung ist das Fallenschloß 30 über einen Lösemechanismus 32 entriegelbar. Es ist zu bemerken, daß in der Zeichnung jeweils die verriegelte Hochklappstellung des Halteteils 26 dargestellt ist, wobei die nicht dargestellte Kopfstütze aufgrund eines bogenförmigen Verlaufes ihrer Trägerstangen in ihrer Gebrauchsstellung steht.

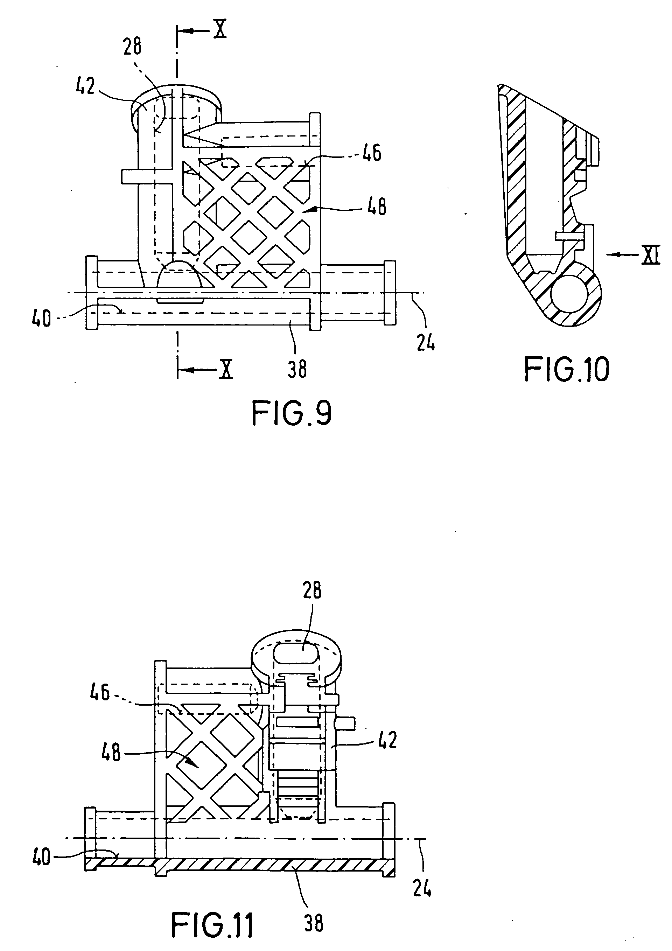

Das Kopfstützenhalteteil 26 besteht vorzugsweise aus zwei Einzelteilen, und zwar aus zwei in Richtung der gemeinsamen Schwenkachse 24 voneinander beabstandeten, im wesentlichen spiegelsymmetrisch ausgebildeten Aufnahmeteilen 34, 36. Wie am Beispiel des Aufnahmeteils 34 in den Fig. 9 bis 11 veranschaulicht ist, besteht jedes Aufnahmeteil aus einem Schwenklagerabschnitt 38 mit einer zur Schwenkachse 24 koaxialen durchgehenden Lageröffnung 40 sowie aus einem Aufnahmeabschnitt 42, der eine der bereits erwähnten Aufnahmeöffnungen 28 für die Trägerstange aufweist, wobei die Aufnahmeöffnung 28 jeweils zur Schwenkachse 24 bzw. zur Lageröffnung 40 zumindest annähernd senkrecht verläuft. Gemäß Fig. 2 sind die beiden Aufnahmeteile 34, 36 über eine zur Schwenkachse 24 parallele mit dem Fallenschloß 30 zusammenwirkende Verriegelungsstange 44 verbunden. Diese Verriegelungsstange 44 wird somit jeweils zusammen mit den Aufnahmeteilen 34, 36 bzw. mit dem Halteteil 26 verschwenkt.

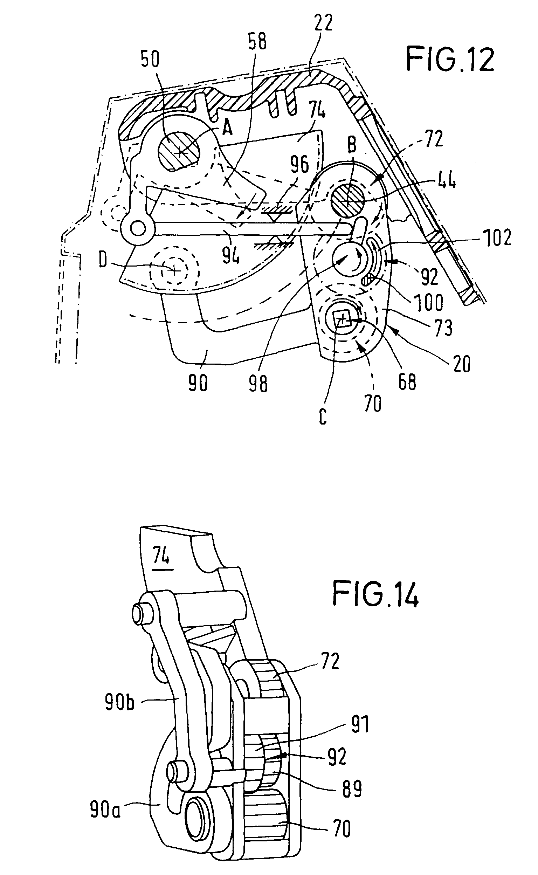

Hierbei weist jedes Aufnahmeteil 34, 36 eine Aufnahmeöffnung 46 für ein Ende der Verriegelungsstange 44 auf, somit sitzt die Verriegelungsstange 44 beidendig in jeweils einer Aufnahmeöffnung 46 der beiden Aufnahmeteile 34, 36 und erstreckt sich zwischen den Aufnahmeteilen 34, 36 frei parallel zur Schwenkachse 24. In diesem Bereich wirkt die Verriegelungsstange 44 mit dem Fallenschloß 30 zusammen. Dies wird im folgenden anhand der Fig. 5 noch näher erläutert werden. Wie sich vor allem aus den Fig. 9 und 11 ergibt, weist jedes Aufnahmeteil 36, 34 in seinem jeweils dem anderen Aufnahmeteil 34, 36 zugekehrten Winkelbereich zwischen dem Schwenklagerabschnitt 38 und dem Aufnahmeabschnitt 42 für die Verriegelungsstange 44 aufweisenden, insbesondere etwa rechteckigen Verbindungsabschnitt 48 auf. Dieser Verbindungsabschnitt 48 dient zur Versteifung der Anbindung zwischen dem Aufnahmeabschnitt 42 und dem Schwenklagerabschnitt 38 sowie auch zur Versteifung des Übergangs von dem Aufnahmeabschnitt 42 zu der Verriegelungsstange 44.

Gemäß Fig. 3 sind für die schwenkbare Lagerung des Kopfstützen-Halteteils 26 vorzugsweise zwei sich in Richtung der Schwenkachse 24 erstreckende Schwenkwellen 50, 52 vorgesehen, die sich durch die Lageröffnungen 40 der Aufnahmeteile 34, 36 erstrecken. Dabei ist eine der beiden Schwenkwellen, und zwar die Schwenkwelle 50, als Teil des Lösemechanismus 32 einendig über einen Schwenkhebel 54 (siehe hierzu Fig. 2) mit einem insbesondere pneumatischen Betätigungsorgan 56 (sog. Unterdruckdose) sowie anderendig drehmomentschlüssig mit einer zum Verriegeln und Endriegeln mit dem Fallenschloß 30 zusammenwirkenden Sperrklinke 58 verbunden.

Die Verriegelungsfunktion des Fallenschlosses 30 und die Entriegelungsfunktion des Lösemechanismus 32 sollen nun insbesondere anhand der Fig. 5 erläutert werden. Das Fallenschloß 30 besteht im wesentlichen aus einer mit der Verriegelungsstange 44 zusammenwirkenden Gabelfalle 60, die ihrerseits mit der Sperrklinke 58 zusammenwirkt. Gemäß Fig. 5 stützt sich in der dargestellten Hochklappstellung die die Verriegelungsstange 44 arretierende Gabelfalle 60 federkraftbedingt an der Sperrklinke 58 ab. Die Sperrklinke 58 ist über die Schwenkwelle 50 und den Schwenkhebel 54 von dem Betätigungsorgan 56 derart bewegbar, daß die Sperrklinke 58 gegen Federkraft in Pfeilrichtung 62 von der Gabelfalle 60 weg verschwenkt werden kann, wodurch dann die Gabelfalle 60 freigegeben und daher zur Freigabe der Verriegelungsstange 44 ihrerseits federkraftbedingt in Pfeilrichtung 64 verschwenkt wird. Aufgrund der Federkraftbeaufschlagung des Halteteils 26 wird dies nach Freigabe der Verriegelungsstange 44 in Pfeilrichtung 66 in die Rückklappstellung verschwenkt. Beim Wiederhochklappen gegen die Federkraft in eine zur Pfeilrichtung 66 entgegengesetzte Richtung wird dann die Verriegelungsstange 44 wieder im Fallenschloß 30 bzw. in der Gabelfalle 60 so verriegelt, wie es in Fig. 5 dargestellt ist.

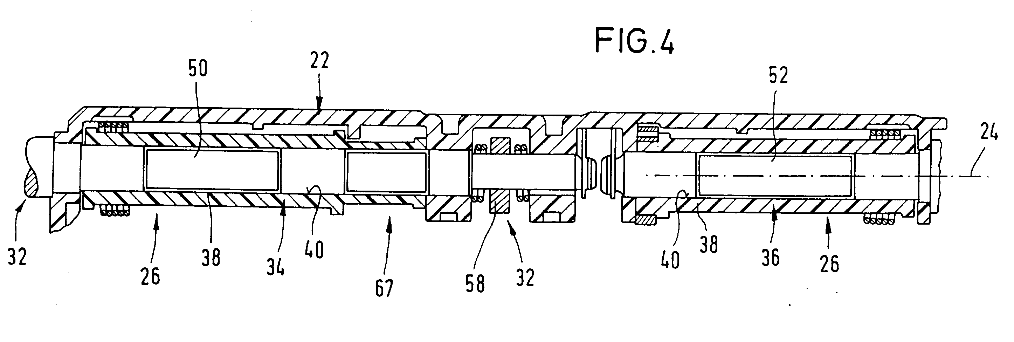

Die bis hier insbesondere anhand der Fig. 2 bis 5 und 9 bis 11 beschriebene Ausführung der Klappvorrichtung 4 entspricht im wesentlichen den aus dem Stand der Technik bekannten Ausführungsformen, wobei sie vorzugsweise im wesentlichen aus Kunststoff besteht und einen Aufbau gemäß der o.g. EP-A-0 636 513 (A1) aufweist. Auf diese genannte Veröffentlichung wird daher in vollem Umfang Bezug genommen.

Vorzugsweise ist nun auf der Verriegelungsstange 44 z.B. im Bereich 67 des Aufnahmeteils 34 das Getriebeelement 20 zum Verschwenken des Halteteils 26 angeordnet.

Die Fig. 6 zeigt eine erste vorteilhafte Ausführungsform des Getriebeelements 20, dessen Antriebseingang 68 parallel zu der Verriegelungsstange 44 angeordnet ist. Dies ist besonders vorteilhaft, falls unterhalb der Klappvorrichtung 4 z. B. aufgrund eines eingebauten Skisacks oder dergleichen nur ein beschränkter Einbauraum im PKW vorhanden ist.

Die Fig. 7 zeigt als eine weitere Ausführungsform ein Getriebeelement 20, dessen Antriebseingang 68 insbesondere senkrecht zu der Verriegelungsstange 44 angeordnet ist. So ist mit Hilfe dieser verschiedenen Ausführungsformen, die einen seitlichen oder einen senkrechten, in der Einbaulage im Kraftfahrzeug insbesondere etwa vertikal von unten zugeführten Anschluß einer Antriebswelle 6 gewährleisten, eine Anpassung an die verschiedenen Platzverhältnisse in den verschiedenen Kraftfahrzeugen möglich. Weiterhin ist es möglich, bei entsprechenden Anforderungen z.B. aufgrund der Platzverhältnisse die Antriebseingänge 68 des Getriebeelements 20 in entsprechend abgewinkelten Ausführungsformen zu verwenden.

Bei der Ausführungsform nach Fig. 6 ist das Getriebeelement 20 als Stirnradgetriebe ausgeführt, wobei das über die Antriebswelle 6 angetriebene Eingangszahnrad 70 ein auf der Verriegelungsstange 44 drehbar gelagertes Antriebszahnrad 72 antreibt. Um eine Schwenkbewegung der Verriegelungsstange 44 und damit des Halteteils 26 in einem Winkelbereich von insbesondere 90° zu erreichen, kämmt das Antriebszahnrad 72 mit einem feststehenden, auf dem Lagerteil 22 montierten, insbesondere kreissektorförmigen Zahnradelement 74. Hierbei erstreckt sich das Zahnradelement 74 bzw. dessen Verzahnung vorzugsweise über einen Winkelbereich größer/gleich 90°.

Die Ausführungsform nach Fig. 7 zeigt ein Getriebeelement 20 mit senkrechtem Antriebseingang 68, wobei die als Stirnräder ausgeführten Zahnräder bzw. das Zahnradelement 74 als Kegelräder bzw. Kegelradelement ausgeführt sind.

In einer bevorzugten Ausführungsform des Getriebeelements 20 nach Fig. 7 ist das Antriebszahnrad 72 als kombiniertes Kegel-Stirnzahnrad ausgebildet und weist sowohl eine Kegelradverzahnung als auch eine Stirnradverzahnung auf (nicht dargestellt). Dabei wird das kombinierte Antriebszahnrad 72 - wie in Fig. 7 gezeigt - über eine Kegelradverzahnung durch das angetriebene Eingangszahnrad 70 angetrieben und kämmt dann über eine auf einem zylindrischen Fortsatz des kombinierten Antriebszahnrads 72 angeordnete Stirnradverzahnung (nicht dargestellt) mit dem Zahnradelement 74. Das Zahnradelement 74 weist hierbei in Anpassung an das kombinierte Antriebszahnrad 72 ebenfalls eine Stirnradverzahnung auf (nicht dargestellt).

Weiterhin zeigt die Fig. 7 eine Rutschkupplung 76, die einer sicheren, zerstörungsfreien Kraftübertragung von der Antriebswelle 6 auf das Getriebeelement 20 dient. In einer bevorzugten Ausführungsform der Erfindung ist die Rutschkupplung 76 in das Getriebeelement 20 integriert. Die Rutschkupplung 76 besteht im wesentlichen aus zwei Kupplungselementen 78, 80, einem Gehäuseteil 82 und einer Druckfeder 84. Die Druckfeder 84 bringt die äußere Kraft für die Kraftschlußverbindung der Kupplungselemente 78, 80 auf, die das entsprechende Drehmoment vom Motor auf die Getriebeeinheit 10, von dort weiter auf die biegsame Antriebswelle 6 und weiter auf das Getriebeelement 20 übertragen. Hierbei sind die Druckfeder 84 und die Reibflächen der Kupplungselemente 78, 80 so ausgelegt, daß die Zahnräder der jeweiligen Getriebeeinheiten 10, 20 oder die flexiblen Antriebswellen 6 nicht zerstört werden können.

Die Kupplungselemente 78, 80 bestehen jeweils aus einem scheibenförmigen Element 86, das mittig einen senkrechten, aus dem Gehäuseteil 82 herausragenden zylinderförmigen Fortsatz 88 aufweist. Hierbei weisen die Fortsätze 88 in Anpassung an die Antriebswellen 6 bzw. an die Getriebeeinheiten 10, 20 entsprechende Anschlußformen auf. In der bevorzugten Ausführungsform sind die Anschlußformen als Innen- bzw. Außenmehrkant ausgeführt, wobei jedoch auch Vielzahnformen oder andere, insbesondere lösbare, zur Drehmomentübertragung geeignete Verbindungsformen denkbar sind.

Einer Zerstörung der Zahnräder oder der elastischen Antriebswellen 6 kann auch durch eine elektronische Zustandsabfrage der bewegten Teile vorgebeugt werden, wobei die Rutschkupplung 76 dann nicht unbedingt notwendig ist.

Die Fig. 8 zeigt eine Schnittdarstellung einer erfindungsgemäßen motorisch antreibbaren Klappvorrichtung 4 im Bereich 67 des Aufnahmeteils 34, wobei in dem Befestigungsbereich 67 das Getriebeelement 20 für die Schwenkbewegung der Klappvorrichtung 4 angeordnet ist.

In der Fig. 8 wird schematisch die Schwenkbewegung der Klappvorrichtung 4 verdeutlicht. Hierzu sind zwei Klappstellungen dargestellt, zum einen die verriegelte "Hochklappstellung" P 1 der Klappvorrichtung 4 und zum anderen die "Rückklappstellung" P 2 der Klappvorrichtung 4. Das nicht dargestellte Halteteil 26 wird um die Schwenkachse 24, (hier dargestellt durch die in der Schwenkachse 24 liegende Schwenkwelle 50), über einen Winkel von insbesondere größer/gleich 90° aus der Klappstellung P 1 in die Klappstellung P 2 ( oder umgekehrt) bewegt. Ausgehend von der Hochklappstellung P 1 bilden die Punkte A, B, C und D, wenn sie durch gedachte Geraden (A - B - C - D - A) verbunden werden, ein Parallelogramm (A entspricht Schwenkachse 24, B entspricht Verriegelungsstange 44, C, D entspricht Gelenkachsen eines Verbindungselements 90 bzw. 90a). Die so konstruierte "Parallelogrammführung" gewährleistet in jeder Schwenkstellung des Halteteils 26 im wesentlichen eine fest definierte, unveränderbare Winkel-Ausrichtung des Getriebeelements 20 relativ zu dem Lagerteil 22 und verhindert somit ein ungewolltes Verschwenken und zu starke Biegungen der Antriebswellen 6. Bei der Auslegung der Parallelogrammführung sind die Punkte A bis D konstruktiv so anzuordnen, daß ihre Achsen in keiner Schwenkstellung des Halteteils 26 in einer gemeinsamen Ebene liegen. Denn dieser Zustand hätte aufgrund der wirkenden Kraftrichtungen und -verhältnisse eine Instabilität der Winkelausrichtung des auf der Verriegelungsstange 44 drehbar angeordneten Getriebeelements 20 zur Folge und ist daher durch entsprechende konstruktive Festlegung der Parallelogrammpunkte A bis D im Schwenkbereich auszuschließen. Die beschriebene instabile Position darf daher ausschließlich außerhalb des Schwenkbereichs, im schlechtesten Fall in den Endstellungen P1 und P2 auftreten.

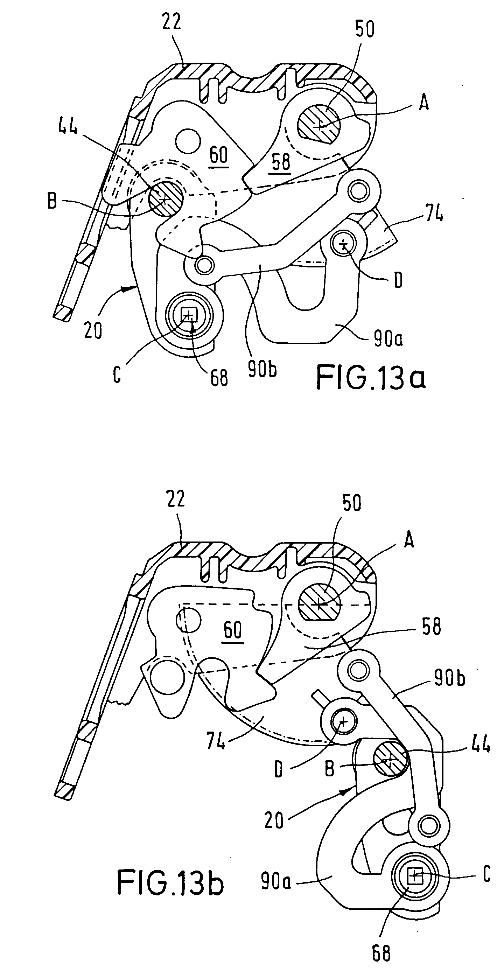

Sollte es aus konstruktionsbedingten oder anderweitigen Gründen nicht möglich sein, die Punkte A bis D wie beschrieben zu positionieren, ist es alternativ möglich, die Parallelogrammführung über zwei Verbindungselemente 90a, 90b anstelle des einzelnen Verbindungselements 90 zu führen. Wie die Fig. 13a und 13b zeigen, wird dabei das schwenkbar gelagerte Getriebeelement 20 über ein entsprechend gestaltetes Verbindungselement 90a geführt und in seiner Rückklappstellung P2 begrenzt und über ein weiteres Verbindungselement 90b in jeder Schwenkstellung des Halteteils 26 in einer fest definierten unveränderbaren Winkelausrichtung gehalten. Hierdurch wird bei einer möglichen "Überlagerung" der Punkte A bis D ein "Umklappen" des Parallelogramms wirksam vermieden.

Die Fig. 12 zeigt einen Schnitt der erfindungsgemäßen Klappvorrichtung 4 im Bereich des in der Klappvorrichtung 4 angeordneten Getriebeelements 20. Das Getriebeelement 20 ist in dieser Ausführungsform mit seitlichem Antriebseingang 68 dargestellt. Dabei ist im Unterschied zu Fig. 6 zwischen dem Eingangszahnrad 70 und dem auf der Verriegelungsstange 44 angeordneten Antriebzahnrad 72 ein aus einem Distanzzahnrad 89 und einem Antriebszahnkranz 91 bestehendes Stufenzahnrad 92 angeordnet. Durch das Stufenzahnrad 92 werden insbesondere zwei Vorteile erzielt: zum einen ist der Antriebseingang 68 für den Anschluß einer elastischen Antriebswelle 6 leichter zugänglich und zum anderen sind bei entsprechender Übersetzung der Zahnräder nur geringe Antriebsdrehmomente erforderlich.

Weiterhin ist in den Fig. 5 und 12 ein Entriegelungsmechanismus gemäß einer bevorzugten Ausführungsform der Erfindung dargestellt. Dabei ist die Sperrklinke 58 mit einem Gelenkhebel 94 verbunden, der über ein Führungslager 96 in axialer Richtung frei beweglich geführt wird und an seinem freien Ende über vorzugsweise einen Schaltnocken 98 angetrieben wird. Der Schaltnocken 98 ist in diesem Ausführungsbeispiel auf der Drehachse des Stufenzahnrades 92 angeordnet und dabei in zumindest einer der beiden möglichen Rotationsrichtungen kraftformschlüssig über eine Rastverzahnung oder eine andere Art von Freilaufeinrichtung mit dem Antriebszahnkranz 91 derart verbunden, daß die beiden Teile nach Überwindung eines bestimmten Drehmomentes zumindst in einer Drehrichtung relativ beweglich zueinander drehbar sind. Das Distanzzahnrad 89 kämmt dabei mit dem Antriebszahnrad 72. Für den automatischen Entriegelungsvorgang des Fallenschlosses 30 wird die Sperrklinke 58 mit einem ersten Drehwinkel (ca. 60°) des Schaltnockens 98 über den Gelenkhebel 94 betätigt und somit das Fallenschloß 30 entriegelt. Dabei wird der Schaltnocken 98 zusammen mit dem Antriebszahnkranz 91 über das Eingangszahnrad 70 angetrieben. Während dieses ersten Drehwinkels des Schaltnockens 98 wird das Distanzzahnrad 89 und somit das Antriebszahnrad 72 nicht angetrieben, sondern nur die Sperrklinke 58 über den vom Antriebszahnkranz 91 angetriebenen Schaltnocken 98 und den Gelenkhebel 94 entriegelt. Das wird dadurch erreicht, daß ein Mitnehmeransatz 100 des Antriebszahnkranzes 91 über einen entsprechenden Kreissektor (ca. 60°) in einer kreisbogenförmigen schlitzartigen Freilaufaussparung 102 frei in dem Distanzzahnrad 89 läuft und erst nach diesem Freilauf das Distanzzahnrad 89 mitnimmt bzw. antreibt. So wird über einen ersten Drehwinkelbereich die Klappvorrichtung 4 entriegelt und nach dieser automatischen Entriegelung das schwenkbare Halteteil 26 angetrieben. Die Fig. 14 zeigt dabei eine perspektivische Darstellung der bevorzugten Ausführungsform des Getriebelementes 20 mit dem Stufenzahnrad 92. Soll das Halteteil 26 und somit das Getriebeelement 20 aus der nicht verriegelten Rückklappstellung (nicht dargestellt) wieder in die verriegelte Hochklappstellung fahren, muß in dieser verriegelten Hochklappstelllung die Ausgangsposition des Schaltnockens 98, wie sie in Fig. 12 dargestellt ist, wieder gewährleistet sein. Dafür kann beispielsweise ein Anschlaghebel vorgesehen sein (nicht dargestellt), der sich vom Lagerteil 22 aus zum Schaltnocken 98 erstreckt und diesen bei der Rückklappbewegung des Halteteils in seiner Ausgangsposition begrenzt. Dabei kann es vorkommen, daß die Ausgangsposition des Schaltnockens 98 bezüglich des erforderlichen Drehwinkels bereits vor dem Erreichen der Endstellung P 1 des Getriebeelementes 20 gegeben ist. Aus diesem Grund muß gewährleistet sein, daß in dieser blockierenden Endstellung des Schaltnockens 98 die Zahnräder des Getriebeelements 20 nicht zerstört werden können. Dies wird insbesondere dadurch erreicht, daß der Schaltnocken 98 mit seinem Antriebszahnkranz 91 kraftformschlüssig über eine Rastverzahnung oder dergleichen verbunden ist, so daß der Antriebszahnkranz 91 und der Schaltnocken 98 zumindest in einer Drehrichtung relativ beweglich zueinander drehbar sind. Falls das Eingangszahnrad 70 über den Antriebseingang 68 in Richtung der verriegelten Hochklappstellung angetrieben würde, würde das Eingangszahnrad 70 den Antriebszahnkranz 91 des Schaltnockens 98 antreiben, und da der Schaltnocken 98 über ein Stopelement in seiner Ausgangsstellung blockiert ist, bleibt der Schaltnocken 98 stehen und sein Antriebszahnkranz 91 kann aufgrund der Rastverzahnung oder dergleichen, die zumindest in einer Drehrichtung nach Überwindung eines Drehmomentes eine Relativbeweglichkeit zwischen Antriebszahnkranz und Schaltnocken 98 ermöglicht, weiter angetrieben werden, ohne daß ein Zahnrad zerstört wird.

In der folgenden Funktionsbeschreibung wird, wie in den Figuren der Zeichnung dargestellt, von der verriegelten "Hochklappstellung" P 1 der Klappvorrichtung 4 ausgegangen.

Die erfindungsgemäße Klappvorrichtung 4 ist sowohl manuell als auch automatisch von einer "Hochklappstellung" P 1 in eine "Rückklappstellung" P 2 sowie umgekehrt von Stellung P 2 in Stellung P 1 verstellbar.

Bei der automatischen Verstellung von der Hoch- in die Rückklappstellung wird zuerst das Fallenschloß 30 der Klappvorrichtung 4 entriegelt. Dies ist einerseits über ein Betätigungsorgan 56 möglich, welches über den Schwenkhebel 54 die mit der Schwenkwelle 50 form- und kraftschlüssig verbundene Sperrklinke 58 in Pfeilrichtung 62 bewegt und somit die Gabelfalle 60 freigibt oder andererseits über den von dem Schaltnocken 98 angetriebenen mit der Sperrklinke 58 verbundenen Gelenkhebel 94. Das Betätigungsorgan 56 kann als ein pneumatisches und/oder hydraulisches und/oder elektrisches und/oder elektromagnetisches und/oder mechanisches Betätigungsorgan oder dergleichen ausgeführt sein.

Sobald die Antriebseinheit 2 mit Spannung beaufschlagt wird, werden die elektromagnetischen Klauenkupplungen 16 betätigt und gewährleisten die Übertragung der Rotationsbewegung von dem Antriebsmotor 8 über die Getriebeeinheit 10 auf die Antriebswellen 6. Hierbei wird, falls notwendig, über die Getriebeeinheit 10 die Drehzahl des Antriebsmotors 8 herabgesetzt. Vorzugsweise mit geringer zeitlicher Verzögerung wird der Antriebsmotor 8 mit Spannung versorgt und treibt über das Schneckenrad 12 ein Ausgangszahnrad 14 an. Über das jeweilige Ausgangszahnrad 14, die elektromagnetische Klauenkupplung 16 und die Antriebswelle 6 wird die Rotationsbewegung auf das vorzugsweise mit einer Rutschkupplung 76 versehene Getriebeelement 20 übertragen. Hierbei ist die Rutschkupplung 76 so ausgelegt, daß sie maximal ein Drehmoment überträgt, das eine Zerstörung von Bauteilen, insbesondere der Zahnräder und der Antriebswellen 6, ausschließt. Weiterhin ist das Getriebeelement 20, falls notwendig, so ausgelegt, daß die Drehzahl des Antriebsmotors 8 ein zweites Mal herabgesetzt wird. Die Rutschkupplung 76 ist mit Vorteil in das Getriebeelement 20 integriert und auf der Verriegelungsstange 44 der Klappvorrichtung 4 schwenkbar gelagert. Das Getriebeelement 20 besteht im wesentlichen aus einem drehbar auf der Verriegelungsstange 44 montierten Antriebszahnrad 72, einem mit diesem kämmenden Eingangszahnrad 70 und einem Getriebegehäuse 73. Dabei greift das Antriebszahnrad 72 zusätzlich kämmend mit einem auf dem Lagerteil 22 befestigten Zahnradelement 74 ineinander. Dieses Zahnradelement 74 ist insbesondere senkrecht zwischen den beiden stumpfwinklig zueinander stehenden Plattenabschnitten des Lagerteils 22 angeordnet, wobei das Zahnradelement 74 im wesentlichen die Schwenkbewegung des Halteteils 26 bestimmt. Damit während des gesamten Schwenkvorganges im gesamten Schwenkbereich das Getriebeelement 20 und die gegebenenfalls vorhandene Rutschkupplung 76 eine feste und definierte Position (Winkelausrichtung) haben, ist das Gehäuse 18 des Getriebeelements 20 über das vorzugsweise winkelförmige Verbindungselement 90 bzw. über Verbindungselemente 90a, 90b mit dem Zahnradelement 74 verbunden (Parallelogrammführung) . Das Verbindungselement 90 ist im wesentlichen parallel zu der Fläche des Zahnradelements 74 angeordnet und in den beiden Gelenkachsen C und D drehbar gelagert. Mit Vorteil weist das winkelförmige Verbindungselement 90 einen Winkel von ca. 90° auf und dient neben der Erhaltung der Winkelausrichtung des Getriebeelements 20 auch der mechanischen Begrenzung des Schwenkweges in Richtung Rückklappstellung dadurch, daß es in der Endstellung P 2 die Schwenkbewegung der Verriegelungsstange 44 begrenzt.

Die Gelenkachsen C und D des Verbindungselements 90 können auch anderweitig angeordnet sein. Je nach Anordnung der Gelenkachsen C und D kann auch das Verbindungselement 90 anderweitig (z.B. bogenförmig oder gerade) ausgeführt sein.

In einer bevorzugten Ausführungsform ist die Klappvorrichtung 4 einerseits automatisch durch die beschriebene Antriebsanordnung 6, 8, 10, 20 zwischen den beiden Klappstellungen P 1 und P 2 schwenkbar und andererseits insbesondere aus der Rückklappstellung P 2 manuell in die verriegelte Hochklappstellung P 1 schwenkbar. Weiterhin ist sichergestellt, daß die Klappvorrichtung 4 in der Hochklappstellung auf jeden Fall sicher verriegelt ist, z. B. durch elektronische Positionsabfrage. Sollte die Klappvorrichtung 4 manuell aus der Rückklappstellung in die Hochklappstellung gebracht und nicht bis in die Verriegelungsposition gezogen werden, ist bei laufendem Fahrzeug oder eingeschalteter Zündung sichergestellt, daß die Kopfstütze automatisch in eine der beiden Endpositionen, vorzugsweise in die verriegelte Hochklappstellung, gefahren wird. Umgekehrt ist sichergestellt, daß sobald die Klappvorrichtung 4 entriegelt wurde, die Kopfstütze auf jeden Fall in die Rückklappstellung gefahren wird.

## Patentansprüche

1. Klappvorrichtung für eine KFZ-Kopfstütze mit einem an einem Lagerteil (22) um eine Schwenkachse (24) schwenkbar gelagerten Kopfstützen-Halteteil (26), welches zwischen einer Rückklappstellung und einer Hochklappstellung verschwenkbar sowie in der Hochklappstellung über ein Fallenschloß (30) mittels einer parallel zur Schwenkachse des Halteteils (26) angeordneten Verriegelungsstange (44) verriegelbar und zur Freigabe der Schwenkbewegung in die Rückklappstellung über einen Lösemechanismus (32) entriegelbar ist,
**gekennzeichnet durch** eine motorisch antreibbare Antriebseinrichtung mit mindestens einem mit dem Lagerteil (22) stationär verbundenen Zahnradelement (74) und mindestens einem mit dem Halteteil (26) verbundenen und zum Verschwenken des Halteteils (26) mit dem Zahnradelement (74) zusammenwirkend antreibbaren Getriebeelement (20), welches an der Verriegelungsstange (44) angeordnet ist.

2. Klappvorrichtung nach Anspruch 1,
**dadurch gekennzeichnet,** daß das Getriebeelement (20) der Antriebseinrichtung über mindestens eine biegsame Antriebswelle (6) mit einem Antriebsmotor (8) verbindbar ist.

3. Klappvorrichtung nach Anspruch 2,
**dadurch gekennzeichnet,** daß zwischen dem Antriebsmotor (8) und der Antriebswelle (6) eine Getriebeeinheit (10) angeordnet ist.

4. Klappvorrichtung nach Anspruch 3,
**dadurch gekennzeichnet,** daß die Getriebeeinheit (10) über eine Kupplungseinheit (16), die insbesondere als elektromagnetische Klauenkupplung ausgeführt ist, mit der Antriebswelle (6) verbindbar ist.

5. Klappvorrichtung nach einem oder mehreren der Ansprüche 2 bis 4,
**dadurch gekennzeichnet,** daß zwischen der Antriebswelle (6) und dem Getriebeelement (20) eine Rutschkupplung (76) angeordnet ist.

6. Klappvorrichtung nach Anspruch 5,
**dadurch gekennzeichnet,** daß die Rutschkupplung (76) in dem Getriebeelement (20) integriert ist.

7. Klappvorrichtung nach einem oder mehreren der Ansprüche 2 bis 6,
**dadurch gekennzeichnet,** daß die Getriebeeinheit (10) aus einem mit der Antriebswelle des Antriebsmotors (8) drehmomentschlüssig verbundenen Zahnrad (12), das insbesondere als Schneckenrad ausgeführt ist, und mindestens einem von diesem angetriebenen Ausgangszahnrad (14) besteht.

8. Klappvorrichtung nach Anspruch 7,
**dadurch gekennzeichnet,** daß das Ausgangszahnrad (14) einseitig, vorzugsweise über eine Kupplungseinheit (16) mit der Antriebswelle (6), verbindbar ist.

9. Klappvorrichtung nach Anspruch 7,
**dadurch gekennzeichnet,** daß das Ausgangszahnrad (14) beidseitig, vorzugsweise über jeweils eine Kupplungseinheit (16) mit jeweils einer Antriebswelle (6), verbindbar ist.

10. Klappvorrichtung nach einem oder mehreren der Ansprüche 1 bis 9,
**dadurch gekennzeichnet**, daß das Getriebeelement (20) mit dem Halteteil (26) derart schwenkbeweglich verbunden ist, daß das Getriebeelement (20) in jeder Schwenkstellung des Halteteils (26) im wesentlichen die gleiche Winkelausrichtung relativ zu dem Lagerteil (22) aufweist.

11. Klappvorrichtung nach Anspruch 10,
**dadurch gekennzeichnet**, daß die Führung des Getriebeelements (20) für die Schwenkbewegung des Halteteils (26) durch eine Parallelogrammführung gewährleistet ist, wobei die Schwenkachse (24), die Verriegelungsstange (44) und zwei Gelenkachsen eines gelenkig zwischen dem Lagerteil (22) und dem Getriebeelement (20) angeordneten Verbindungselementes (90) die Eckpunkte (A, B, C, D) eines Parallelogramms bilden, die konstruktiv so angeordnet sind, daß die Achsen in keiner Schwenkstellung des Halteteils (26) in einer gemeinsamen Ebene liegen.

12. Klappvorrichtung nach einem oder mehreren der Ansprüche 1 bis 11,
**dadurch gekennzeichnet,** daß das Getriebeelement (20) aus mindestens einem drehbar auf der Verriegelungsstange (44) oder dem Halteteil (26) gelagerten, mit dem stationären Zahnradelement (74) zusammenwirkenden Antriebszahnrad (72), einem antreibbaren und auf das Antriebszahnrad (72) wirkenden Eingangszahnrad (70) sowie einem schwenkbar auf der Verriegelungsstange (44) oder dem Halteteil (26) gelagerten Getriebegehäuse (73) besteht.

13. Klappvorrichtung nach einem oder mehreren der Ansprüche 1 bis 12,
**dadurch gekennzeichnet,** daß das Getriebeelement (20) mindestens einen bezüglich seiner Rotationsachse parallel zur Schwenkachse (24) verlaufenden Antriebseingang (68) aufweist.

14. Klappvorrichtung nach einem oder mehreren der Ansprüche 1 bis 12,
**dadurch gekennzeichnet,** daß die Getriebeeinheit (20) mindestens einen bezüglich seiner Rotationsachse senkrecht zur Schwenkachse verlaufenden Antriebseingang (68) aufweist.

15. Klappvorrichtung nach einem oder mehreren der Ansprüche 1 bis 14,
**dadurch gekennzeichnet,** daß das Zahnradelement (74) sich mit seiner Verzahnung kreissektorförmig über einen Winkelbereich, der größer/gleich dem Schwenkwinkelbereich des Halteteils (26) ist, erstreckt.

16. Klappvorrichtung nach einem oder mehreren der Ansprüche 1 bis 15,
**dadurch gekennzeichnet,** daß der Lösemechanismus (32) ein pneumatisches und/oder hydraulisches und/oder elektrisches und/oder elektromagnetisches und/oder mechanisches Betätigungsorgan (56) aufweist.

17. Klappvorrichtung nach einem der Ansprüche 1 bis 16,
**dadurch gekennzeichnet,** daß die Führung des Getriebeelements (20) für die Schwenkbewegung des Halteteils (26) durch eine Parallelogrammführung gewährleistet ist, wobei die Schwenkachse (24), die Verriegelungsstange (44) und zwei Gelenkachsen eines gelenkig zwischen dem Lagerteil (22) und dem Getriebeelement (20) angeordneten ersten Verbindungselements (90a) die Eckpunkte (A, B, C, D) eines Parallelogramms bilden und zwischen dem Lagerteil (22) und dem Getriebeelement (20) ein zweites Verbindungselement (90b) gelenkig angeordnet ist, wodurch im gesamten Schwenkbereich das Getriebeelement (20) eine feste und definierte Winkelausrichtung hat.

18. Klappvorrichtung nach einem der Ansprüche 1 bis 17,
**dadurch gekennzeichnet**, daß die Sperrklinge (58) gelenkig mit einem Gelenkhebel (94) verbunden ist, wobei der Gelenkhebel (94) über ein Führungslager (96) geführt und über einen Schaltnocken (98) betätigbar ist.

19. Klappvorrichtung nach Anspruch 18,
**dadurch gekennzeichnet,** daß der Schaltnocken (98) in das Getriebeelement (20) integriert ist.

20. Klappvorrichtung nach einem der Ansprüche 1 bis 19,
**dadurch gekennzeichnet,** daß das Getriebeelement (20) aus mindestens dem antreibbaren Eingangszahnrad (70), dem mit dem Zahnradelement (74) kämmenden Antriebszahnrad (72) und einem zwischen Eingangszahnrad (70) und Antriebszahnrad (72) angeordneten Stufenzahnrad (92) sowie dem Getriebegehäuse (73) besteht.

21. Klappvorrichtung nach Anspruch 19 oder 20,
**dadurch gekennzeichnet,** daß das Stufenzahnrad (92), aus einem Distanzzahnrad (89) und einem Antriebszahnkranz (91) besteht, wobei das Distanzzahnrad (89) über einen Kreissektorabschnitt eine kreisbogenförmige, schlitzartige Freilaufaussparung (102) aufweist, in die ein Mitnehmeransatz (100) des Antriebszahnkranzes (91) eingreift, wodurch ausgehend von der verriegelten Hochklappstellung abhängig vom Winkelbereich der Freilaufaussparung (102) über diesen Winkelbereich nur der Schaltnocken (98) zur Betätigung des Gelenkhebels (94) angetrieben wird und, nachdem der Mitnehmeransatz (100) den Winkelbereich der Freilaufaussparung (102) durchlaufen hat, das Distanzzahnrad (92) über den Mitnehmeransatz (100) des Antriebszahnkranzes (91) angetrieben wird.

22. Klappvorrichtung nach den Ansprüchen 18 und 21,
**dadurch gekennzeichnet,**
daß zwischen Antriebszahnkranz (91) und Schaltnocken (98) - zumindest in der Rotationsrichtung der Zahnräder bei Bewegung des Getriebeelements (20) in Richtung der verriegelten Hochklappstellung - bei Überschreitung eines bestimmten Drehmoments ein Freilauf gewährleistet ist.

## Claims

1. Folding apparatus for a motor-vehicle head restraint, having a head-restraint holding part (26) which is mounted on a bearing part (22) in a manner which allows it to pivot about a pivot axis (24), can be pivoted between a folded-back position and a folded-upward position, and also which can be locked in the folded-upward position by means of a locking rod (44), arranged parallel to the pivot axis of the holding part (26), via a falling-latch lock (30) and can be unlocked via a release mechanism (32) in order to enable the pivoting movement into the folded-back position, characterized by a drive device which can be driven by a motor and has at least one gearwheel element (74), which is connected in a stationary manner to the bearing part (22), and at least one gear element (20), which is connected to the holding part (26) and can be driven in a manner such that it interacts with the gearwheel element (74) in order to pivot the holding part (26) and which is arranged on the locking rod (44).

2. Folding apparatus according to Claim 1, characterized in that the gear element (20) of the drive device can be connected to a drive motor (8) via at least one flexible drive shaft (6).

3. Folding apparatus according to Claim 2, characterized in that a gear unit (10) is arranged between the drive motor (8) and the drive shaft (6).

4. Folding apparatus according to Claim 3, characterized in that the gear unit (10) can be connected to the drive shaft (6) via a coupling unit (16), which is designed in particular as an electromagnetic claw coupling.

5. Folding apparatus according to one or more of Claims 2 to 4, characterized in that a slip coupling (76) is arranged between the drive shaft (6) and the gear element (20).

6. Folding apparatus according to Claim 5, characterized in that the slip coupling (76) is integrated in the gear element (20).

7. Folding apparatus according to one or more of Claims 2 to 6, characterized in that the gear unit (10) consists of a gearwheel (12) which is connected to the drive shaft of the drive motor (8) in a manner such that it is locked with respect to torque and is designed, in particular, as a worm wheel, and of at least one output gearwheel (14) which is driven by the gearwheel (12).

8. Folding apparatus according to Claim 7, characterized in that the output gearwheel (14) can be connected on one side to the drive shaft (6), preferably via a coupling unit (16).

9. Folding apparatus according to Claim 7, characterized in that the output gearwheel (14) can be connected on both sides to a respective drive shaft (6), preferably via a respective coupling unit (16).

10. Folding apparatus according to one or more of Claims 1 to 9, characterized in that the gear element (20) is connected pivotably to the holding part (26) in such a manner that the gear element (20) essentially has the same angular alignment relative to the bearing part (22) in every pivoted position of the holding part (26).

11. Folding apparatus according to Claim 10, characterized in that the guiding of the gear element (20) for the pivoting movement of the holding part (26) is ensured by a parallelogram guide, the pivot axis (24), the locking rod (44) and two hinge axes of a connecting element (90), arranged in a hinged manner between the bearing part (22) and the gear element (20), forming the corner points (A, B, C, D) of a parallelogram, which corner points are arranged by design in such a manner that the axes do not lie in a common plane in any pivoted position of the holding part (26).

12. Folding apparatus according to one or more of Claims 1 to 11, characterized in that the gear element (20) consists of at least one drive gearwheel (72), which is mounted rotatably on the locking rod (44) or the holding part (26) and interacts with the stationary gearwheel element (74), of a drivable input gearwheel (70) which acts on the drive gearwheel (72), and of a gear housing (73) which is mounted pivotably on the locking rod (44) or the holding part (26).

13. Folding apparatus according to one or more of Claims 1 to 12, characterized in that the gear element (20) has at least one drive input (68) which, as regards its axis of rotation, runs parallel to the pivot axis (24).

14. Folding apparatus according to one or more of Claims 1 to 12, characterized in that the gear unit (20) has at least one drive input (68) which, as regards its axis of rotation, runs perpendicularly to the pivot axis.

15. Folding apparatus according to one or more of Claims 1 to 14, characterized in that the toothing of the gearwheel element (74) extends in the form of a circular sector over an angular range which is greater than/equal to the angular range of pivoting of the holding part (26).

16. Folding apparatus according to one or more of Claims 1 to 15, characterized in that the release mechanism (32) has a pneumatic and/or hydraulic and/or electric and/or electromagnetic and/or mechanical actuating member (56).

17. Folding apparatus according to one of Claims 1 to 16, characterized in that the guiding of the gear element (20) for the pivoting movement of the holding part (26) is ensured by a parallelogram guide, the pivot axis (24), the locking rod (44) and two hinge axes of a first connecting element (90a), which is arranged in a hinged manner between the bearing part (22) and the gear element (20), forming the corner points (A, B, C, D) of a parallelogram, and a second connecting element (90b) being arranged in a hinged manner between the bearing part (22) and the gear element (20), as a result of which the gear element (20) has a fixed and defined angular alignment over the entire range of pivoting.

18. Folding apparatus according to one of Claims 1 to 17, characterized in that the detent pawl (58) is connected in a hinged manner to a hinged lever (94), the hinged lever (94) being guided via a guide bearing (96) and being actuable via a trip cam (98).

19. Folding apparatus according to Claim 18, characterized in that the trip cam (98) is integrated in the gear element (20).

20. Folding apparatus according to one of Claims 1 to 19, characterized in that the gear element (20) consists at least of the drivable input gearwheel (70), the drive gearwheel (72) which meshes with the gearwheel element (74), and of a stepped gearwheel (92) arranged between the input gearwheel (70) and drive gearwheel (72), and also of the gear housing (73).

21. Folding apparatus according to Claim 19 or 20, characterized in that the stepped gearwheel (92) consists of a spacer gearwheel (89) and a drive rim gear (91), the spacer gearwheel (89) having, over a sector section of a circle, a circular arc-shaped, slot-like freewheeling cutout (102) in which an entraining projection (100) of the drive rim gear (91) engages, as a result of which, starting from the locked folded-upward position and as a function of the angular range of the freewheeling cutout (102), only the trip cam (98) is driven over this angular range, in order to actuate the hinged lever (94) and, after the entraining projection (100) has passed through the angular range of the freewheeling cutout (102), the spacer gearwheel (92) is driven via the entraining projection (100) of the drive rim gear (91).

22. Folding apparatus according to Claims 18 and 21, characterized in that freewheeling is ensured between the drive rim gear (91) and trip cam (98) - at least in the direction of rotation of the gearwheels when the gear element (20) is moved in the direction of the locked folded-upward position - when a certain torque is exceeded.

## Revendications

1. Dispositif à bascule pour un appui tête de véhicule automobile, comprenant une partie (26) de retenue de l'appui tête montée pour pivoter sur une partie palier (22) autour d'un axe de pivotement (24), et qui peut pivoter entre une position rabattue et une position relevée, et qui peut être verrouillée dans la position relevée par l'intermédiaire d'une serrure à loquet (30), au moyen d'une tige de verrouillage (44) disposée parallèlement à l'axe de pivotement de la partie de retenue (26), et peut être déverrouillée par l'intermédiaire d'un mécanisme de déclenchement (32) pour libérer le mouvement de pivotement aboutissant à la position rabattue,
caractérisé par un dispositif d'entraînement pouvant être entraîné au moteur et qui comprend au moins un élément de roue dentée (74), relié rigidement à la partie palier (22) et au moins un élément de mécanisme (20), relié à la partie de retenue (26), qui est disposé sur la tige de verrouillage (44) et qui peut être entraîné en coopérant avec l'élément de roue dentée (74) pour faire pivoter la partie de retenue (26).

2. Dispositif à bascule selon la revendication 1, caractérisé en ce que l'élément de mécanisme (20) du dispositif d'entraînement peut être relié à un moteur d'entraînement (8) par l'intermédiaire d'au moins un arbre d'entraînement flexible (6).

3. Dispositif à bascule selon la revendication 2,
caractérisé en ce qu'une unité de mécanisme (10) est interposée entre le moteur d'entraînement (8) et l'arbre d'entraînement (6).

4. Dispositif à bascule selon la revendication 3,
caractérisé en ce que l'unité de mécanisme (10) peut être reliée à l'arbre d'entraînement (6) par l'intermédiaire d'une unité d'accouplement (16) qui est en particulier réalisée sous la forme d'un accouplement à griffes électromagnétique.

5. Dispositif à bascule selon une ou plusieurs des revendications 2 à 4,
caractérisé en ce qu'un accouplement à glissement (76) est interposé entre l'arbre d'entraînement (6) et l'élément de mécanisme (20).

6. Dispositif à bascule selon la revendication 5,
caractérisé en ce que l'accouplement à glissement (76) est intégré dans l'élément de mécanisme (20).

7. Dispositif à bascule selon une ou plusieurs des revendications 2 à 6,
caractérisé en ce que l'unité de mécanisme (10) est constituée par une roue dentée (12) reliée pour la transmission du couple à l'arbre d'entraînement du moteur d'entraînement (8), et qui est en particulier une roue à vis sans fin et par au moins une roue dentée de sortie (14) entraînée par cette dernière.

8. Dispositif à bascule selon la revendication 7,
caractérisé en ce que la roue dentée de sortie (14) peut être reliée à l'arbre d'entraînement (6) d'un côté, de préférence par l'intermédiaire d'une unité d'accouplement (16).

9. Dispositif à bascule selon la revendication 7,
caractérisé en ce que la roue dentée de sortie (14) peut être reliée sur chaque côté à un arbre d'entraînement (6), de préférence par l'intermédiaire d'une unité d'accouplement (16).

10. Dispositif à bascule selon une ou plusieurs des revendications 1 à 9,
caractérisé en ce que l'élément de mécanisme (20) est relié à la partie de retenue (26), avec possibilité de pivotement, de telle manière que l'élément de mécanisme (20) présente sensiblement la même orientation angulaire par rapport à la partie palier (22) dans chaque position de pivotement de la partie de retenue (26).

11. Dispositif à bascule selon la revendication 10,
caractérisé en ce que le guidage de l'élément de mécanisme (20) pour le mouvement de pivotement de la partie de retenue (26) est assuré par un guidage à parallélogramme, l'axe de pivotement (24), la tige de verrouillage (44) et deux axes d'articulation d'un élément de liaison (90) disposés de façon articulée entre la partie palier (22) et l'élément de mécanisme (20) formant les sommets (A, B, C, D) d'un parallélogramme qui sont agencés sous l'aspect de la construction de telle manière que les axes ne se trouvent dans un plan commun dans aucune position de pivotement de la partie de retenue (26).

12. Dispositif à bascule selon une ou plusieurs des revendications 1 à 11,
caractérisé en ce que l'élément de mécanisme (20) est composé d'au moins une roue dentée d'entraînement (72) montée rotative sur la tige de verrouillage (44) ou sur la partie de retenue (26) et qui coopère avec l'élément de roue dentée fixe (74), d'une roue dentée d'entrée (70) pouvant être entraînée et qui agit sur la roue dentée d'entraînement (72), ainsi que d'un boîtier de mécanisme (73) monté pour pouvoir pivoter sur la tige de verrouillage (44) ou sur la partie de retenue (26).

13. Dispositif à bascule selon une ou plusieurs des revendications 1 à 12,
caractérisé en ce que l'élément de mécanisme (20) présente au moins une entrée d'entraînement (68) dont l'axe de rotation s'étend parallèlement à l'axe de pivotement (24).

14. Dispositif à bascule selon une ou plusieurs des revendications 1 à 12,
caractérisé en ce que l'unité d'entraînement (20) présente au moins une entrée d'entraînement (68) dont l'axe de rotation s'étend perpendiculairement à l'axe de pivotement.

15. Dispositif à bascule selon une ou plusieurs des revendications 1 à 14,
caractérisé en ce que l'élément de roue dentée (74) s'étend, par sa denture, en forme de secteur de cercle, sur une plage angulaire qui est supérieure ou égale à la plage angulaire de pivotement de la partie de retenue (26).

16. Dispositif à bascule selon une ou plusieurs des revendications 1 à 15,
caractérisé en ce que le mécanisme de déclenchement (32) présente un organe d'actionnement (56) pneumatique et/ou hydraulique et/ou électrique et/ou électromagnétique et/ou mécanique.

17. Dispositif à bascule selon une des revendications 1 à 16,
caractérisé en ce que le guidage de l'élément de mécanisme (20) pour le mouvement de pivotement de la partie de retenue (26) est assuré par un guidage à parallélogramme, l'axe de pivotement (24), la tige de verrouillage (44) et deux axes d'articulation d'un premier élément de liaison (90A) disposé de façon articulée entre la partie palier (22) et l'élément de mécanisme (20) formant les sommets (A, B, C, D) d'un parallélogramme, et un deuxième élément de liaison (90B) étant disposé de façon articulée entre la partie palier (22) et l'élément de mécanisme (20), de sorte que l'élément de mécanisme (20) possède une orientation angulaire fixe et définie sur toute la plage de pivotement.

18. Dispositif à bascule selon une des revendications 1 à 17,
caractérisé en ce que le cliquet de blocage (58) est relié de façon articulée à un levier articulé (94), le levier articulé (94) étant guidé au moyen d'un palier de guidage (96) et pouvant être actionné au moyen d'une came de commande (98).

19. Dispositif à bascule selon la revendication 18,
caractérisé en ce que la came de commande (98) est intégrée dans l'élément de mécanisme (20).

20. Dispositif à bascule selon une des revendications 1 à 19,
caractérisé en ce que l'élément de mécanisme (20) est composé au moins de la roue dentée d'entrée (70) pouvant être entraînée, de la roue dentée d'entraînement (72) qui engrène l'élément de roue dentée (74) et d'une roue dentée étagée (92) disposée entre la roue dentée d'entrée (70) et la roue dentée d'entraînement (72), ainsi que du boîtier de mécanisme (73).

21. Dispositif à bascule selon la revendication 19 ou 20,
caractérisé en ce que la roue dentée étagée (92) est composée d'une roue dentée d'écartement (89) et d'une couronne dentée d'entraînement (91), la roue dentée d'écartement (89) présentant sur un segment de secteur de cercle un évidement de roue libre (102) en arc de cercle, en forme de fente, dans lequel est engagé un appendice entraîneur (100) de la couronne dentée d'entraînement (91), de sorte que, en partant de la position relevée verrouillée, et selon la plage angulaire de l'évidement de roue libre (102), seule la came de commande (98) destinée à l'actionnement du levier articulé (94) est entraînée sur cette plage angulaire, et, après que l'appendice entraîneur (100) a parcouru la plage angulaire de l'évidement de roue libre (102), la roue dentée d'écartement (92) est entraînée par l'intermédiaire de l'appendice entraîneur (100) de la couronne dentée d'entraînement (91).

22. Dispositif à bascule selon les revendications 18 et 21,
caractérisé en ce qu'un effet de roue libre est assuré entre la couronne dentée d'entraînement (91) et la came de commande (98) - du moins dans le sens de rotation des roues dentées pendant que l'élément de mécanisme (20) se déplace en direction de la position relevée verrouillée - en cas de dépassement d'un couple déterminé.
